# EUROPÄISCHE PATENTSCHRIFT

(11) **EP 0 941 896 B1**
(45) Veröffentlichungstag und Bekanntmachung des Hinweises auf die Patenterteilung: **28.03.2001**
(21) Anmeldenummer: 99101454.9
(22) Anmeldetag: 27.01.1999
(51) Int. Cl.: B60R 19/56, B60P 1/44

(54) **Hubladebühne mit höhenverstellbarem mitfahrenden Unterfahrschutz**
Loading tailgate with height adjustable underride protection
Hayon élévateur avec protection anti-encastrement réglable en hauteur

(30) Priorität: 12.03.1998 DE 19810679
(43) Veröffentlichungstag der Anmeldung: 15.09.1999
(73) Patentinhaber: Bär, Gerd, 74078 Heilbronn (DE)
(72) Erfinder: Kappeler, Achim, 74235 Erlenbach (DE)
(74) Vertreter: KOHLER SCHMID + PARTNER

(56) Entgegenhaltungen:
- DE-A- 2 426 552
- US-A- 3 638 811
- US-A- 4 930 973
- US-A- 4 991 890
- US-A- 5 297 840
- US-A- 5 624 143

## Beschreibung

Die vorliegende Erfindung betrifft eine Hubladebühne für eine an der Rückseite eines Fahrzeugs vorgesehene Plattform, mit einer die Plattform tragenden Hubeinrichtung, die zum Heben und Senken der Plattform zwischen einer unteren und einer oberen Position verfahrbar ist, und mit einem Unterfahrschutz, der an der Hubeinrichtung nach unten stehend angebracht ist und mit dieser mit verfährt, wobei der Unterfahrschutz an solchen Teilen der Hubeinrichtung angebracht ist, deren Höhe sich während des Verfahrens der Hubeinrichtung ändert, und seinerseits an den höhenveränderlichen Teilen zwischen zwei Endstellungen beweglich gelagert ist.

Eine derartige Hubladebühne ist beispielsweise durch die gattungs bildende US-A-4,991,890 bekanntgeworden.

Um das unterfahren unter das Fahrzeug zu verhindern, ist an dessen Rückseite jeweils ein Unterfahrschutz angebracht. Bei einer am Fahrzeug vorgesehenen Hubladebühne durchfährt allerdings konstruktionsbedingt deren Hubmechanismus den Bereich des Unterfahrschutzes.

Zur Lösung dieses Problems wird in einer ersten bekannten Variante ein mehrteiliger, meist ein dreigeteilter Unterfahrschutz verwendet, zwischen dessen Teilen der Hubmechanismus ungehindert hindurchverfahren kann. In einer zweiten bekannten Lösungsvariante ist der Unterfahrschutz starr an einer Hubschwinge des Hubmechanismus nach unten stehend angebracht und verfährt mit diesem beim Heben und Senken mit (sog. mitfahrender Unterfahrschutz).

Zum Beispiel bei Fahrzeugen mit einer Tiefkuppeleinrichtung, bei denen im Anhängerbetrieb unterhalb der Hubladebühne eine Zugdeichsel verläuft, sind sowohl der mehrteilige als auch der mitfahrende Unterfahrschutz nicht möglich. Daher wird für diese Anwendungen entweder ein dreigeteilter klappbarer Unterfahrschutz, der aus dem Bereich der Zugdeichsel durch Umklappen manuell entfernt und in der umgeklappten Position manuell verriegelt wird, oder ein durchgehender Unterfahrschutz eingesetzt, der mittels Hydraulikzylindern aus dem Bereich der Zugdeichsel verstellbar ist. Die erste Variante erfordert schwere Körperarbeit, ist wegen der einzeln zu verriegelnden Unterfahrschutzteile zeitraubend und umständlich, so daß der Unterfahrschutz meist in seine schützende Position nicht wieder zurückgeklappt wird. Die zweite Variante ist schwer und aufgrund der Hydraulik und deren Ansteuerung auch sehr teuer.

Die eingangs genannte US-A-4,991,890 offenbart eine Hubladebühne für eine an der Rückseite eines Fahrzeugs vorgesehene Plattform, die mittels einer Hubeinrichtung zwischen einer unteren und einer oberen Position verfahrbar ist. Ein an der Hubeinrichtung nach unten abstehender Unterfahrschutz ist einerseits schwenkbar am Fahrzeugrahmen und andererseits schwenkbar am höhenveränderlichen Lenkerteil der Hubeinrichtung gelagert, so daß der Unterfahrschutz mit der Hubeinrichtung mitverfährt. In der Fahrstellung, d.h. bei hochverfahrener Hubeinrichtung und zusammengeklappter Plattform, befindet sich der Unterfahrschutz dann in seiner unterfahrschutzwirksamen, einzigen Endstellung.

Aus der DE-A-27 58 852 ist weiterhin eine Hubladebühne mit einer Sperrstange als Unterfahrschutz bekannt, die an dem oberen Lenkerteil von zwei Lenkerteilen des unteren Lenkers fest angebracht ist. Beim Anheben der Ladeplattform vom Boden schwenkt der obere Lenkerteil nach oben, so daß die daran befestigte Sperrstange an Teilen der Hubladebühne vorgesehen ist, deren Höhe sich während des Verfahrens der Hubeinrichtung ändert. Allerdings ist die Sperrstange erst in der zusammengeklappten Fahrstellung der Hubladebühne als Unterfahrschutz wirksam. Durch Entfalten der Ladeeinrichtung wird die Sperrstange aus ihrer einzigen unterfahrschutzwirksamen hinteren Endstellung in die unterfahrschutzunwirksame vordere Stellung überführt. Damit die Sperrstange das Unterfahren von Fahrzeugen unter die verstaute Ladeeinrichtung wirksam verhindern kann, befindet sich die Sperrstange möglichst tief über dem Boden. Diese tiefe Stellung des Unterfahrschutzes ist jedoch dann von Nachteil, wenn das Fahrzeug mit einem Anhänger betrieben werden soll, da der dann wirkungslose Unterfahrschutz aufgrund seiner tiefen Stellung das Ankuppeln des Anhängers be- oder ganz verhindern kann.

Es ist daher die Aufgabe der vorliegenden Erfindung, eine Hubladebühne der eingangs genannten Art derart weiterzubilden, daß der Unterfahrschutz den Raum unter der Hubladebühne möglichst nicht beeinträchtigt.

Diese Aufgabe wird erfindungsgemäß auf überraschend einfache aber wirkungsvolle Weise dadurch gelöst, daß in der Fahrstellung der Hubeinrichtung der Unterfahrschutz sowohl in eine unterfahrschutzwirksame untere Endstellung als auch in eine deichselschwenkraumgebende obere Endstellung verschwenkbar ist.

Der mit der Erfindung erzielte Vorteil besteht darin, daß der Unterfahrschutz bei Bedarf entweder in seine unterfahrschutzwirksame untere oder in seine deichselschwenkraumgebende obere Endstellung verschwenkt werden kann. Beispielsweise kann sich der Unterfahrschutz in seiner oberen Endstellung während des Anhängerbetriebs und in seiner unteren Endstellung während des Solobetriebs eines Fahrzeugs befinden. Insbesondere bei einem Fahrzeug mit Tiefkuppeleinrichtung läßt sich der Unterfahrschutz zwischen einer möglichst tiefen unteren Endstellung, die er z.B. im Fahrbetrieb ohne Anhänger (Solobetrieb) einnehmen kann, und einer möglichst hohen oberen Endstellung bewegen, in der er sich außerhalb des Bereichs einer in die Tiefkuppeleinrichtung eingreifenden Zugdeichsel befindet.

In vorteilhafter Weiterbildung dieser Ausführungsform kann der Unterfahrschutz in beiden Endstellungen jeweils feststellbar sein. Der Unterfahrschutz ist dann in beiden Endstellungen jeweils sicher gehalten und gegen ein selbsttätiges Bewegen bzw. Umklappen in die jeweils andere Endstellung gesichert.

Zum Feststellen kann insbesondere eine zwischen der Hubeinrichtung und dem Unterfahrschutz wirkende Zug- oder Druckeinrichtung, z.B. eine Zugfeder, dienen, die zwischen den beiden Endstellungen des Unterfahrschutzes eine Totpunktlage bzw. ihr Wirkungsmaximum durchläuft. Der Unterfahrschutz läßt sich dann durch Überwinden dieser Totpunktlage zwischen seinen beiden Endstellungen umklappen und ist in beiden Endstellungen durch die Zug- oder Druckeinrichtung jeweils sicher gehalten.

Bei ganz besonders bevorzugten Weiterbildungen ist bei abgesenkter Plattform der Unterfahrschutz durch Auflaufen oder -setzen auf den Boden aus seiner unteren Endstellung in Richtung auf seine obere Endstellung angehoben. Diese Weiterbildung hat den wesentlichen Vorteil, daß zum Anheben des Unterfahrschutzes keine körperliche Arbeit zu leisten ist. Durch das meist hydraulische Absenken der Hubeinrichtung wird der Unterfahrschutz relativ zur Hubeinrichtung in seine obere Endstellung angehoben, in der er gegen ein selbsttätiges Zurückkehren in seine untere Endstellung gesichert ist. In dieser oberen Endstellung kann der Unterfahrschutz z.B. verrasten oder durch die oben erwähnte Zug- oder Druckeinrichtung gehalten sein. Bei wieder angehobener Plattform läßt sich der Unterfahrschutz dann durch Lösen der Verrastung bzw. durch Überwinden der Federkraft erneut in seine untere Endstellung überführen bzw. herunterdrücken.

Bevorzugt ist bei dieser Weiterbildung der Unterfahrschutz zumindest bis in den Wirkbereich einer den Unterfahrschutz vollends in seine obere Endstellung bewegenden Einrichtung angehoben. Diese Einrichtung kann z.B. die oben beschriebene Zug- oder Druckeinrichtung sein, über deren Totpunktlage der Unterfahrschutz durch Auflaufen auf den Boden angehoben wird.

In einer weiteren Ausgestaltung weist der Unterfahrschutz eine in Richtung auf den Boden vorstehende Rolle auf, mit der der Unterfahrschutz beim Absenken der Hubeinrichtung auf den Boden aufläuft. Beim weiteren Absenken der Plattform kann die Rolle am Boden abrollen, so daß keine Beschädigungen am Unterfahrschutz auftreten.

In einer anderen Weiterbildung ist an der Hubeinrichtung ein Anschlag vorgesehen, an dem der Unterfahrschutz in seiner unteren Endstellung anschlägt. Dieser Anschlag kann außer als Endanschlag auch zur Aufnahme der bei einem Unterfahren auftretenden Unterfahrschutzkräfte dienen.

Schließlich kann in einer vorteilhaften Weiterbildung an der Hubeinrichtung auch noch ein pendelnd gelagerter Anschlag vorgesehen sein, an dem der Unterfahrschutz bei angehobener Plattform in seiner unteren Endstellung anschlägt. Dieser Anschlag verhindert, daß der Unterfahrschutz, auch wenn ein besonders flaches Fahrzeug von hinten bzw. unten auf den Unterfahrschutz auffährt, nicht angehoben wird, sondern trotzdem in der unteren Endstellung als Aufprallschutz verbleibt.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: in einer Seitenansicht die für die Erfindung wesentlichen Teile der Hubladebühne bei angehobener Plattform mit dem Unterfahrschutz in seiner oberen und unteren Endstellung;
- Fig. 2: die Hubladebühne der Fig. 1 bei auf den Boden abgesenkter Plattform und mit dem Unterfahrschutz in seiner oberen Endstellung; und
- Fig. 3: ein Detail der Hubladebühne der Fign. 1 und 2 im Bereich ihres Unterfahrschutzes.

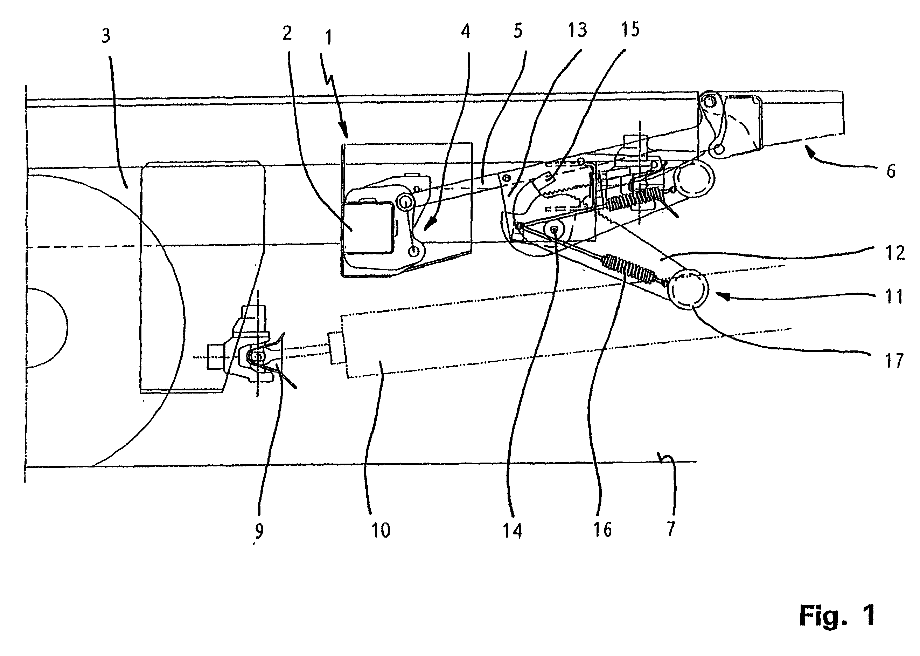

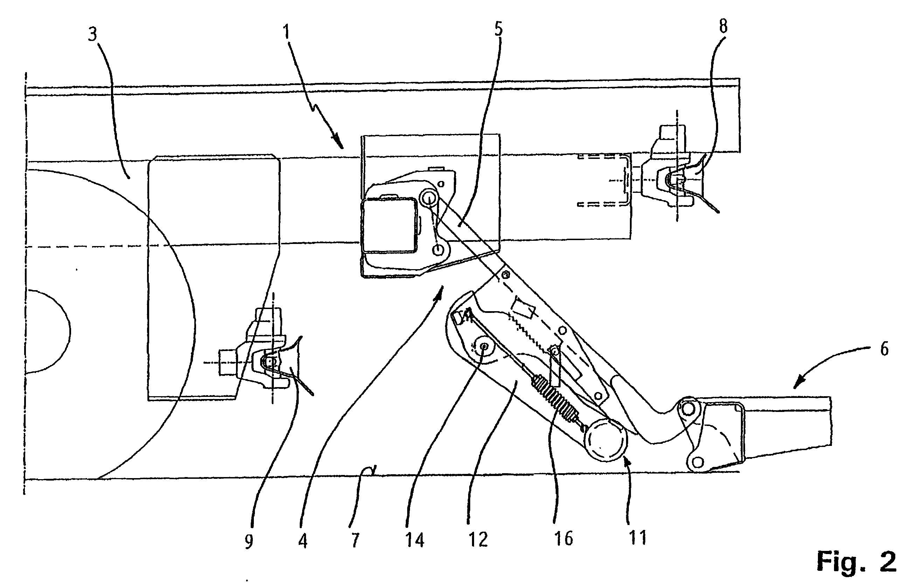

In den Fign. 1 und 2 ist mit **1** eine Hubladebühne bezeichnet, die in bekannter Weise mittels eines Tragrohrs **2** am Fahrzeugrahmen **3** befestigt ist. Von der parallelogrammartigen Hubeinrichtung **4** der Hubladebühne **1** ist lediglich der eine Hubarm einer Hubschwinge **5** dargestellt, an der eine Plattform 6 schwenkbar befestigt ist. Die Plattform **6** wird durch die Hubeinrichtung **4** zwischen ihrer angehobenen Position (Fig. 1) und ihrer auf den Boden **7** abgesenkten Position (Fig. 2) verfahren, wobei die Plattform 6 aus ihrer oberen Position in eine Vertikalposition schwenkbar ist und dann als Bordwand dient.

Weiterhin sind am Fahrzeugrahmen 3 noch eine Kuppeleinrichtung **8** sowie eine Tiefkuppeleinrichtung **9**, in die in Fig. 2 eine Zugdeichsel **10** eines Anhängers (nicht dargestellt) eingehängt ist, vorgesehen.

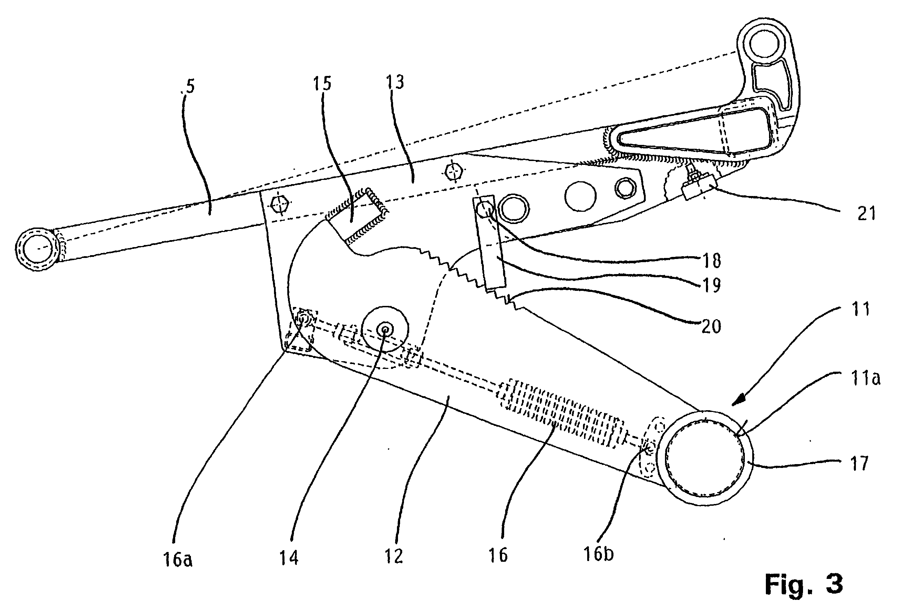

Um das Unterfahren unter das Fahrzeug zu verhindern, ist am Fahrzeugende ein Unterfahrschutz **11** angebracht, der als sog. mitfahrender Unterfahrschutz an der Hubschwinge 5 nach unten stehend angebracht ist und mit dieser beim Heben und Senken mitverfährt. Der als Rundprofil **11a** (Fig. 3) ausgestaltete Unterfahrschutz **11** ist jeweils an dem freien Ende zweier plattenförmiger Arme **12** befestigt, die an Befestigungsplatten **13,** welche an der Hubschwinge 5 starr angebracht sind, schwenkbar bei **14** gelagert sind. Der Unterfahrschutz 11 ist zwischen zwei verschieden hohen Endstellungen verschwenkbar (Fig. 1). Dabei dient in seiner unteren Endstellung ein Anschlag **15** an der Befestigungsplatte 13 als Endanschlag und zur Aufnahme der bei einem Unterfahren auftretenden Unterfahrschutzkräfte, während in seiner oberen Endstellung ein Gummidämpferpaar 21 (Fig. 3) an der Hubschwinge 5 als Anschlag dient. Zur Gewichtsentlastung und Fixierung des Unterfahrschutzes 11 in seiner oberen Endstellung ist jeweils eine Zugfeder **16** zwischen den Arm 12 (in Fig. 3 bei **16b**) und die Befestigungsplatte 13 (Fig. 3 bei **16a**) eingehängt. Indem die Zugfeder 16 beim Verschwenken des Unterfahrschutzes 11 zwischen seinen beiden Endstellungen eine über den Drehpunkt 14 realisierte Totpunktlage bzw. ihr Zugkraftmaximum durchläuft, hält sie den Unterfahrschutz 11 sowohl in seiner oberen als auch in seiner unteren Endstellung.

Im Solobetrieb, d.h. ohne Anhänger bzw. Zugdeichsel 10 in der Tiefkuppeleinrichtung 9, befindet sich der Unterfahrschutz 11 bei geschlossener Plattform 6 in seiner in Fig. 1 gezeigten unteren Endstellung. Ausgehend von dieser Fahrstellung im Solobetrieb wird die Plattform 6 geöffnet und auf den Boden gesenkt (Fig. 2). Da der Abstand des Unterfahrschutzes 11 in seiner unteren Endstellung bei angehobener Plattform 6 zum Boden 7 größer als deren Abstand zum Boden 7 ist, setzt der Unterfahrschutz 11 mit drehbar gelagerten Rollen **17** beim Absenken der Plattform 6 auf den Boden 7 auf. Aufgrund seiner beim Auftreffen leichten Schrägstellung wird der Unterfahrschutz 11 beim weiteren Absenken der Plattform 6 automatisch über die Totpunktlage der Zugfeder 16 hinweg nach oben in seine obere Endstellung (Fig. 2) angehoben bzw. verschwenkt und durch die Zugfeder 16 dort gehalten. Diese obere Endstellung des Unterfahrschutzes 11 ist bei wieder angehobener Plattform 6 zugleich die Stellung für den Anhängerbetrieb (Fig. 1) mittels der Tiefkuppeleinrichtung 9.

Soll das Fahrzeug hingegen im Solobetrieb oder im Anhängerbetrieb mittels der Kuppeleinrichtung 8 eingesetzt werden, so drückt eine Bedienperson bei angehobener Plattform 6 mit dem Fuß den Unterfahrschutz 11 aus seiner oberen Endstellung in die untere Endstellung (Fig. 1), was keine nennenswerte körperliche Arbeit bedeutet. Da die Zugfeder 16 in beiden Endstellungen einen sicheren Halt garantiert, ist eine zusätzlich zu bedienende Verriegelung nicht erforderlich.

Für die untere Endstellung ist jedoch eine selbständig wirkende und somit automatische Verriegelung in Form eines bei 18 pendelnd gelagerten Anschlags **19** (z.B. ein Flachmaterial) angebracht (Fig. 3). Nur bei angehobener Plattform 6 und nur in der unteren Endstellung des Unterfahrschutzes 11 ist dieser Anschlag 19 aufgrund der Schwerkraft etwa senkrecht in Anlage auf den Arms 12 verschwenkt, in dessen gezahnte Oberkante **20** er eingreift. Diese zusätzliche Verriegelung verhindert, daß der Unterfahrschutz 11, auch wenn ein besonders flaches Fahrzeug von hinten bzw. unten auf den Unterfahrschutz 11 auffährt, nicht angehoben wird, sondern trotzdem in der unteren Endstellung als Aufprallschütz verbleibt.

## Patentansprüche

1. Hubladebühne (1) für eine an der Rückseite eines Fahrzeugs vorgesehene Plattform (6), mit einer die Plattform (6) tragenden Hubeinrichtung (4), die zum Heben und Senken der Plattform (6) zwischen einer unteren und einer oberen Position verfahrbar ist, und mit einem Unterfahrschutz (11), der an der Hubeinrichtung (4) nach unten stehend angebracht ist und mit dieser mit verfährt, wobei der Unterfahrschutz (11) an solchen Teilen der Hubeinrichtung (4) angebracht ist, deren Höhe sich während des Verfahrens der Hubeinrichtung (4) ändert, und seinerseits an den höhenveränderlichen Teilen (5) zwischen zwei Endstellungen beweglich gelagert ist,
dadurch gekennzeichnet,
daß in der Fahrstellung der Hubeinrichtung (4) der Unterfahrschutz (11) sowohl in eine unterfahrschutzwirksame untere Endstellung als auch in eine deichselschwenkraumgebende obere Endstellung verschwenkbar ist.

2. Hubladebühne nach Anspruch 1, dadurch gekennzeichnet, daß der Unterfahrschutz (11) in beiden Endstellungen jeweils feststellbar ist.

3. Hubladebühne nach Anspruch 2, gekennzeichnet durch eine zwischen der Hubeinrichtung (4) und dem Unterfahrschutz (11) wirkende Zug- oder Druckeinrichtung (16), die zwischen den beiden Endstellungen des Unterfahrschutzes (11) eine Totpunktlage durchläuft.

4. Hubladebühne nach einem der vorhergehenden Ansprüche, dadurch gekennzeichnet, daß bei abgesenkter Plattform (6) der Unterfahrschutz (11) durch Auflaufen auf den Boden (7) aus seiner unteren Endstellung in Richtung auf seine obere Endstellung angehoben wird.

5. Hubladebühne nach Anspruch 4, dadurch gekennzeichnet, daß der Unterfahrschutz (11) zumindest bis in den Wirkbereich einer den Unterfahrschutz (11) vollends in seine obere Endstellung bewegenden Einrichtung (16) angehoben ist.

6. Hubladebühne nach einem der Ansprüche 4 oder 5, dadurch gekennzeichnet, daß der Unterfahrschutz (11) mindestens eine in Richtung auf den Boden (7) vorstehende Rolle (17) aufweist.

7. Hubladebühne nach einem der vorhergehenden Ansprüche, gekennzeichnet durch einen an der Hubeinrichtung (4) vorgesehenen Anschlag (15), an dem der Unterfahrschutz (11) in seiner unteren Endstellung anschlägt.

8. Hubladebühne nach einem der vorhergehenden Ansprüche, gekennzeichnet durch einen an der Hubeinrichtung (4) pendelnd gelagerten Anschlag (19), an dem der Unterfahrschutz (11) bei angehobener Plattform in seiner unteren Endstellung anschlägt.

## Claims

1. An elevating loader (1) for a platform (6) provided at the back of a motor vehicle and with, supporting the platform (6), a lifting means (4) adapted for movement in order to raise and lower the platform (6) between a lower and an upper position, and with an underride protection (11) which is provided on the lifting means (4) to project downwards and travels with it, the underride protection (11) being mounted on such parts of the lifting means (4) the height of which changes during the movement of the lifting means (4) and is mounted on the variable-height parts (5) for movement between two extreme positions, characterised in that, in the travelling position of the lifting means (4), the underride protection (11) is adapted to be pivoted into an underride protecting extreme low position and into an extreme upper position which provides pivoting space for a draw bar.

2. An elevating loader according to claim 1, characterised in that the underride protection (11) can be locked in either of the two extreme positions.

3. An elevating loader according to claim 2, characterised by a push or pull means (16) acting between the lifting means (4) and the underride protection (11) and which passes through a dead centre point between the two extreme positions of the underride protection (11).

4. An elevating loader according to one of the preceding claims, characterised in that when the platform (6) is lowered, the underride protection (11) is, by running onto the ground (7), raised out of its extreme low position in the direction of its extreme upper position.

5. An elevating loader according to claim 4, characterised in that the underride protection (11) is raised at least into the effective range of a device (16) for moving the underride protection (11) completely into its extreme upper position.

6. An elevating loader according to one of claims 4 or 5, characterised in that the underride protection (11) has a roller (17) projecting in the direction of the ground (7).

7. An elevating loader according to one of the preceding claims, characterised by, provided on the lifting means (4), an abutment (15) against which the underride protection (11) abuts when it is in its extreme low position.

8. An elevating loader according to one of the preceding claims, characterised by, mounted in floating manner on the lifting means (4), an abutment (19) against which the underride protection (11) in its extreme low position abuts the raised platform.

## Revendications

1. Hayon élévateur (1) pour une plate-forme (6) prévue à la face postérieure d'un véhicule, comprenant un dispositif de levage (4), qui porte la plate-forme (6) et qui peut être déplacé entre une position inférieure et une position supérieure afin de lever et d'abaisser la plate-forme (6), et comprenant une protection anti-encastrement (11), celle-ci étant montée sur le dispositif de levage (4) en dépassement vers le bas et se déplaçant avec celui-ci, ladite protection anti-encastrement (11) étant montée sur celles des parties du dispositif de levage (4) dont la hauteur se modifie pendant le déplacement du dispositif de levage (4) et étant montée de son côté sur les parties dont la hauteur se modifie (5) avec faculté de déplacement entre deux positions finales,
caractérisé en ce que
dans la condition du dispositif de levage (4) en circulation, la protection anti encastrement (11) est susceptible de pivoter aussi bien jusque dans une position finale inférieure assurant une protection anti-encastrement, que jusque dans une position finale supérieure libérant un espace de pivotement pour un attelage.

2. Hayon élévateur selon la revendication 1, caractérisé en ce que la protection anti-encastrement (11) est susceptible d'être fixée respectivement dans les deux positions finales.

3. Hayon élévateur selon la revendication 2, caractérisé par un dispositif de traction ou de poussée (16) agissant entre le dispositif de levage (4) et la protection anti-encastrement (11), qui traverse une position de point mort entre les deux positions finales de la protection anti-encastrement (11).

4. Hayon élévateur selon l'une des revendications précédentes, caractérisé en ce que lorsque la plate-forme (6) est abaissée, la protection anti-encastrement (11) est soulevée depuis sa position finale inférieure en direction de sa position finale supérieure lorsqu'elle vient atteindre le sol (7).

5. Hayon élévateur selon la revendication 4, caractérisé en ce que la protection anti-encastrement (11) est soulevée au moins jusque dans la zone d'action d'un dispositif (16) qui déplace la protection anti-encastrement (11) totalement jusque dans sa position finale supérieure.

6. Hayon élévateur selon l'une des revendications 4 et 5, caractérisé en ce que la protection anti-encastrement (11) comprend au moins un rouleau (17) qui dépasse en direction du sol (7).

7. Hayon élévateur selon l'une des revendications précédentes, caractérisé par une butée (15), prévue sur le dispositif de levage (4) et contre laquelle vient buter la protection anti-encastrement (11) dans sa position finale inférieure.

8. Hayon élévateur selon l'une des revendications précédentes, caractérisé par une butée (19) montée de façon pendulaire sur le dispositif de levage (4) et contre laquelle vient buter la protection anti-encastrement (11) dans sa position finale inférieure lorsque la plate-forme est soulevée.
